Europäisches Patentamt

European Patent Office

Office européen des brevets

(11) Veröffentlichungsnummer: **0 518 307 A2**

(12) **EUROPÄISCHE PATENTANMELDUNG**

(21) Anmeldenummer: **92109799.4**

(22) Anmeldetag: **11.06.92**

(51) Int. Cl.⁵: **G01F 23/74**

(30) Priorität: **14.06.91 DE 4119658**

(43) Veröffentlichungstag der Anmeldung:
**16.12.92 Patentblatt 92/51**

(84) Benannte Vertragsstaaten:
**CH DE FR GB IT LI**

(71) Anmelder: **W. Günther GmbH**
**Virnsberger Strasse 51**
**W-8500 Nürnberg(DE)**

(72) Erfinder: **Dammert, Walter**
**Hellmuth-Hirth-Weg 6**
**W-8500 Nürnberg 10(DE)**

(74) Vertreter: **Tergau, Enno, Dipl.-Ing.**
**Tergau & Pohl Patentanwälte Mögeldorfer**
**Hauptstrasse 51**
**W-8500 Nürnberg 30(DE)**

(54) **Sensoranordnung für die Niveauermittlung von fliessfähigen Medien sowie Verfahren zu deren Herstellung.**

(57) Es wird ein Sensor für die Niveau-Ermittlung von fließfähigen Medien beschrieben, der aus einem Schwimm-Magneten und einer magnetfeldempfindlichen Schaltkette besteht. Die Schaltkette enthält eine Vielzahl von Schalteinheiten, die in Kunststoffgehäusen (4') angeordnet sind, welche ihrerseits an einem bandförmigen Träger befestigt und elektrisch miteinander verbunden sind; jede Schalteinheit besteht aus einem Reed-Schalter und wenigstens einem Widerstand. Die Schaltkette ist so aufgebaut, daß sie unmittelbar aus einem einzigen Ausgangsband herausgearbeitet werden kann, ohne daß es erforderlich ist, zunächst gewonnene separate Schaltereinheiten auf einem Trägerband zu montieren. Dies ist durch folgende Merkmale der Schaltkette möglich:

- Die Kunststoffgehäuse (4') sind an einander gegenüberliegenden Seiten durch metallische Leiter (5) mechanisch miteinander zu einer Kette verbunden;
- dieselben metallischen Leiter (5) verbinden auch die Schalteinheiten elektrisch miteinander;
- an einer Seite der Kunststoffgehäuse befindet sich ein ohne Unterbrechung über die gesamte Kette reichendes metallisches Trägerband (5), von dem jeweils elektrische Querverbindungen (12) zu einem Anschluß eines jeden Reed-

schalters führen;
- an den gegenüberliegenden Seiten der Kunststoffgehäuse (4') befinden sich metallische Schaltbrücken (11), die den zweiten Anschluß eines jeden Reedschalters mit einem Anschluß des zur gleichen Schalteinheit gehörenden Widerstandes und beide mit dem anderen Anschluß des in der Kette nachfolgenden Widerstandes verbinden.

FIG.6

Die Erfindung betrifft eine aus einem Schwimmagneten und einer magnetfeldempfindlichen Schaltkette bestehende Sensoranordnung für die Niveauermittlung von fließfähigen Medien mit folgenden bekannten Merkmalen:

- Die magnetfeldempfindliche Schaltkette enthält eine Vielzahl von gekapselten Schalteinheiten, die an einem bandförmigen Träger befestigt und elektrisch miteinander verbunden sind;
- jede Schalteinheit besteht aus einem Reedschalter und wenigstens einem Widerstand,
  -- die in einem Kunststoffgehäuse zusammengefaßt sind und
  -- deren Anschlüsse über Anschlußleiter nach außen geführt und
  -- über Verschaltungsleiter miteinander verbunden sind.

Derartige Sensoranordnungen sind grundsätzlich bekannt. Sie beruhen auf dem Prinzip, daß ein Schwimmagnet auf der Oberfläche der zu überwachenden Flüssigkeit schwimmt und dabei so angeordnet ist, daß sein Magnetfeld je nach Höhe unterschiedliche magnetfeldempfindliche Schalter betätigen und dadurch den Widerstandswert einer Widerstandskette verändert. Damit der Magnet in horizontaler Richtung geführt wird, befindet er sich zumeist in einem Rohr, welches mit dem zu überwachenden Behälter o.dgl. kommuniziert. Der Schwimmagnet wird also von der ansteigenden oder abfallenden Flüssigkeit mehr oder weniger stark angehoben, so daß seine vertikale Lage jeweils ein Maß für das Flüssigkeitsniveau in der Röhre bzw. in dem damit verbundenen Behälter ist.

Parallel zur Führungsröhre des Schwimmagneten ist die erwähnte magnetfeldempfindliche Schalterkette angeordnet, welche eine Vielzahl von Schalteinheiten enthält, die auf einem bandförmigen Träger befestigt und miteinander verschaltet sind. Jede Schalteinheit besteht aus einem Reed-Schalter und wenigstens einem ohmschen Widerstand, die in einem Kunststoffgehäuse zusammengefaßt und deren Anschlüsse über Anschlußleiter nach außen geführt und über Verschaltungsleiter miteinander verbunden sind. Derjenige Reed-Schalter, der sich in gleicher Höhe wie der Schwimmagnet befindet, wird vom Magnetfeld des Schwimmagneten durchgeschaltet, was die Wirkung hat, daß der zugeordnete Widerstand zu einer Widerstandskette hinzuaddiert oder von dieser subtrahiert wird, so daß die Kette je nach Höhe des Schwimmagneten einen anderen Gesamtwiderstand hat. Der Gesamtwiderstand der Kette kann jeweils von einem Meßinstrument angezeigt oder sonstwie zur Auslösung von Schaltvorgängen verwertet werden.

Sensoranordnungen dieser Art sind beispielsweise in der europäischen Patentanmeldung 0 316 534 beschrieben. Das in dieser Druckschrift anstehende Problem besteht darin, eine Vielzahl von separaten Schaltereinheiten, die zu einer Schalterkette vereinigt werden sollen, auf möglichst einfache und effiziente Weise herzustellen. Es wird dazu von einem Blechband geeigneter Breite ausgegangen, aus welchem die nicht benötigten Teile ausgestanzt werden derart, daß Anschlußleiter sowohl für die ohmschen Widerstände wie auch für die Reed-Schalter zurückbleiben. Wobei diese Anschlußleiter in Anschlußstifte übergehen, wie sie ja grundsätzlich bei Bauelementen bekanntsind, die auf Printplatten o.dgl. verwendet werden sollen. Damit die Anschlußleiter nicht auseinanderfallen, ist das Stanzmuster so gewählt, daß ein Haltestreifen zurückbleibt, der alle Anschlußleiter untereinander und auch mit dem ursprünglichen Blechband verbindet. In diesem Zustand werden die Anschlußleiter dann mit den für sie bestimmten Widerständen und Reed-Schaltern bestückt und je zwei dieser Bauelemente werden schließlich mit Kunststoff umspritzt, wodurch sie in einem kleinen Block, also in einem Kunststoffgehäuse untergebracht werden. Die erwähnten stiftförmigen Verlängerungen der Anschlußleiter sowie auch das Halteband bleiben außerhalb des Kunststoffgehäuses, so daß das Halteband in einem nächsten Fabrikationsschritt abgetrennt und die einzelnen Schaltereinheiten dadurch separiert werden können. Am Ende des Herstellungsprozesses liegt eine Vielzahl von derartigen jeweils aus ohmschem Widerstand und Reed-Schalter bestehenden Schaltereinheiten vor, wobei diese beiden Schaltteile nicht miteinander verschaltet sind sondern lediglich an Leitern befestigt sind, die in Form der besagten Stifte nach außen geführt sind. Zur Herstellung der letztendlich angestrebten Schalterkette müssen diese Baueinheiten dann auf ein geeignetes Printband montiert werden, wobei dieses Printband auf der Rückseite in bekannter Weise die erforderlichen Schaltleiterbahnen aufweist. Nach der Montage werden die Anschlußstifte der Schalter mit den Schalterbahnen verlötet, worauf dann erst die herzustellende Schalterkette vorliegt.

Der Erfindung liegt die Aufgabe zugrunde, eine Schalterkette vorzuschlagen, die derart aufgebaut ist, daß sie unmittelbar aus einem einzigen Ausgangsband herausgearbeitet werden kann, ohne daß es erforderlich ist, zunächst gewonnene separate Schaltereinheiten auf einem Trägerband zu montieren.

Zur Lösung dieser Aufgabe wird eine Schalterkette vorgeschlagen, die durch folgende Merkmale gekennzeichnet ist:

- Die Kunststoffgehäuse, welche je einen Reed-Schalter und wenigstens einen ohmschen Widerstand enthalten, sind an einander gegenüberliegenden Seiten durch metallische Leiter mechanisch miteinander zu einer Kette verbunden;
- dieselben metallischen Leiter verbinden auch die Schalteinheiten elektrisch miteinander;
- an einer Seite der Kunststoff-Gehäuse befindet sich ein ohne Unterbrechung über die gesamte Kette reichendes metallisches Trägerband,
  -- von dem jeweils elektrische Querverbindungen zu einem Anschluß eines jeden Reed-Schalters führen;
- an der gegenüberliegenden Seite der Kunststoffgehäuse befinden sich metallische Schaltbrücken, die den zweiten Anschluß des Reed-Schalters mit einem Anschluß des zur gleichen Schalteinheit gehörenden Widerstandes und beide mit dem anderen Anschluß des in der Kette nachfolgenden Widerstandes verbinden.

Dadurch, daß ein über die gesamte Kette reichendes metallisches Trägerband vorhanden ist, hat die Kette hinreichende mechanische Stabilität, so daß auf ein separates Träger- und Schaltband, welches nach dem Printplattenprinzip aufgebaut ist, verzichtet werden kann.

Vorteilhafterweise sind die Kunststoffgehäuse in Längsrichtung hintereinander angeordnet und die seitlich überstehenden Metallteile (Trägerband, Schaltbrücken) sind in Richtung auf die Kunststoffgehäuse umgebogen. Auf diese Weise ist es möglich, die Gesamtabmessung des Bandes kleiner zu halten. Außerdem werden seitlich überstehende Metallteile vermieden, was vorteilhaft ist, falls die gesamte Kette mit einem Schrumpfschlauch oder einer ähnlichen Umhüllung umgeben werden soll. Allerdings ist es auch möglich und gehört in den Rahmen der Erfindung, daß die Kunststoffgehäuse mit ihren Längsachsen quer zur Längsachse des Trägerbandes angeordnet sind.

Die Erfindung wird im folgenden anhand der beigefügten Zeichnung näher erläutert. Es stellen dar:

Fig. 1    ein schematisches Schaltbild einer Schalterkette,

Fig. 2-5    eine Folge von Arbeitszuständen bei der Herstellung der Schalterkette,

Fig. 6    eine vergrößerte perspektivische Darstellung eines Teiles der Schalterkette,

Fig. 7    einen anderen räumlichen Aufbau der Schaltelemente innerhalb der Schalterkette.

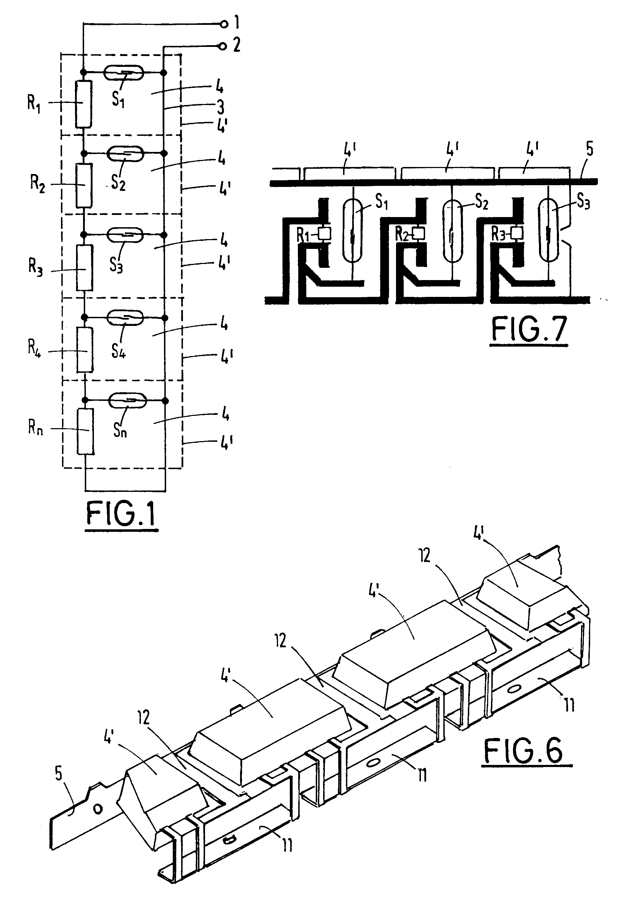

Die in Fig. 1 schematisch dargestellte Schalterkette bestehtaus einer Reihe von hintereinandergeschalteten Widerständen $R_1$ bis $R_n$, deren Enden jeweils zu den äußeren Anschlüssen 1 und 2 der Kette geführt sind. In der Zeichnung sind der Übersichtlichkeit halber lediglich fünf Widerstände dargestellt; je nach Länge der Kette können aber 100 oder mehr derartige Widerstände vorgesehen sein.

Zwischen dem Anschlußleiter 3 und den einzelnen Widerständen der Kette sind Reed-Schalter $S_1$ bis $S_n$ angeordnet. Jeder Widerstand $R_1$ ... $R_n$ ist mit seinem zugehörenden Reed-Schalter $S_1$ ... $S_n$ zu einer Schalteinheit 4 zusammengefaßt und vorzugsweise mit Kunststoff umhüllt.

Sind alle Schalter $S_1$ bis $S_n$ geöffnet, so hat die Widerstandskette $R_1$ bis $R_n$ ihren maximalen Widerstand. Ist der letzte Schalter $S_n$ geschlossen, so wird der Gesamtwiderstand der Kette lediglich durch die Widerstände $R_1$ bis $R_4$ gebildet und ist folglich kleiner als der Maximalwiderstand. Ist auch $S_4$ geschlossen, so sind unabhängig vom Schaltzustand des Reed-Schalters $S_n$ alle Widerstände $R_4$ bis $R_n$ abgeschaltet. Die verbleibende Widerstandskette wird lediglich durch die Widerstände $R_1$, $R_2$ und $R_3$ gebildet. Auf diese Weise läßt sich der Gesamtwiderstand der Kette durch sukzessives Schließen eines der Schalter verändern, was - da Reed-Schalter magnetfeldempfindliche Schalter sind - mit Hilfe des erwähnten Schwimmagneten geschehen kann.

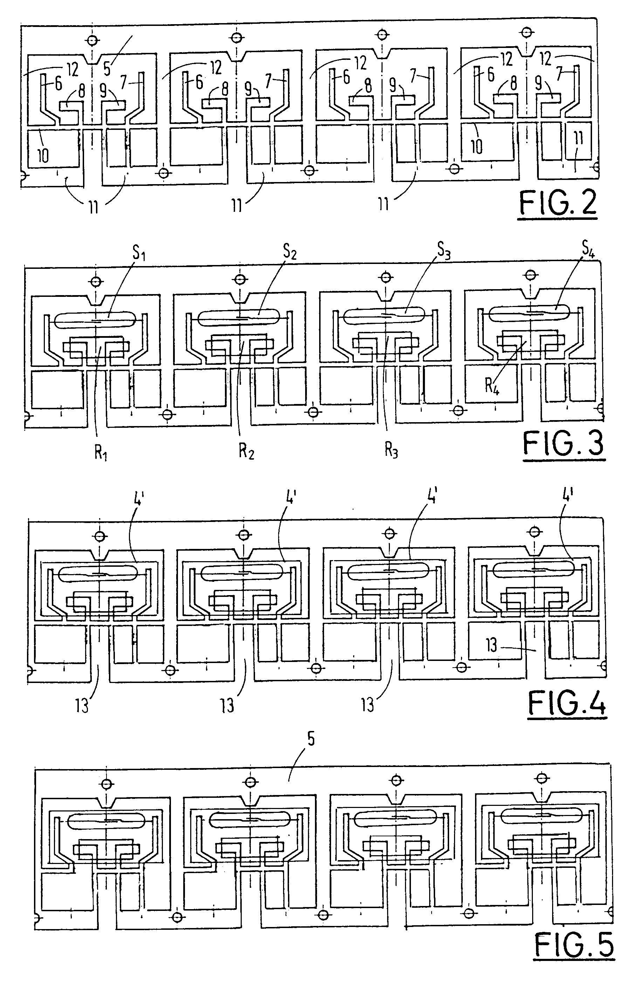

Zur Herstellung der erfindungsgemäßen Schalterkette wird von einem geeigneten Blechstreifen ausgegangen, dessen Breite der Maximalbreite der entstehenden Schaltung entspricht. Durch Ausstanzen oder Ausätzen wird zunächst ein Schaltungsmuster erzeugt, wie es in Fig. 2 dargestellt ist. Das Schaltungsmuster besteht aus einem Trägerstreifen 5, dessen Breite so gewählt ist, daß die entstehende Kette hinreichende Zug- und Biegefestigkeit aufweist. Der Trägerstreifen 5 hat also wesentlich mechanische Aufgaben; zusätzlich dient er aber auch als elektrischer Leiter. Er entspricht im Schaltbild gemäß Fig. 1 dem Anschlußleiter 3.

Im Schaltungsmuster gemäß Fig. 2 bleiben des weiteren je Schalteinheit zwei Anschlußleiter 6 und 7 stehen, die für den Anschluß des Reed-Schalters bestimmt sind. Ferner bleiben je Schalteinheit zwei Anschlußleiter 8 und 9 für den einzusetzenden Widerstand stehen. Alle Anschlußleiter 6, 7, 8, 9 sind vorerst mit einem Stützstreifen 10 verbunden.

Des weiteren bleibt bei der Herstellung des Schaltungsmusters eine Folge von Verbindungsstreifen 11 stehen, wobei jeder Verbindungsstreifen die Anschlußleiter 7 und 9 der vorausgehenden Schalteinheit mit dem Anschlußleiter 8 der nachfolgenden Schalteinheit verbindet. Schließlich bleibt noch eine Folge von Verbindungsstreifen 12 stehen, die sich jeweils zwischen dem Trägerstreifen 5 und dem Stützstreifen 10 erstrecken.

Nach Fertigstellung des Schaltungsmusters gemäß Fig. 2 werden in einem nächsten Arbeitsschritt die Reed-Schalter $S_1$ bis $S_n$ (dargestellt sind in diesem Fall lediglich vier Reed-Schalter) sowie die

Widerstände $R_1$ bis $R_n$ eingesetzt und an den entsprechenden Anschlußleitern befestigt (Fig. 3).

Die Schalterkette ist jetzt bereits fertig bestückt. Die einzelnen Schalteinheiten 4, die jeweils aus einem Reed-Schalter und einem ohmschen Widerstand bestehen, werden nunmehr mit Kunststoff umhüllt, so daß die Kunststoffgehäuse 4' entstehen (Fig. 4).

In einem letzten Arbeitsschritt werden nun die nicht mehr benötigten Teile des Stützstreifens 10 entfernt, so daß unmittelbar die fertige Schalterkette vorliegt, wie sie in Fig. 5 dargestellt ist.

Um die Breite der Schalterkette möglichst klein zu halten, kann es erwünscht sein, den Trägerstreifen 5 sowie auch die Verbindungsstreifen 11 seitlich umzubiegen und sie an die Oberfläche der Kunststoffgehäuse anzulegen. Eine vergrößerte perspektivische Darstellung eines Teiles der Schalterkette, die dies erkennen läßt, ist in Fig. 6 wiedergegeben.

Im vorstehenden wurde anhand der Zeichnungsfolge Fig. 2 bis 5 das Herstellungsverfahren der Schalterkette beschrieben. Die Schalterkette selbst ist in Fig. 5 dargestellt. Das Herstellungsverfahren kann also durch die Aneinanderreihung folgender Verfahrensschritte zusammengefaßt werden:

- Ausstanzen oder Ausätzen eines Schaltungsmusters nach Fig. 2, bei welchem Schaltungsmuster folgende Teile stehen bleiben:
  -- Ein durchgehender Trägerstreifen 5,
  -- zwei Anschlußleiter 6,7 für den Reed-Schalter;
  -- zwei Anschlußleiter 8,9 für den Widerstand;
  --ein Stützstreifen 10;
  -- eine Folge von Verbindungsstreifen 11 zwischen den Anschlußleitern 9,7,8;
  -- eine Folge von Verbindungsstreifen 12 zwischen den Trägerstreifen 5 und den Stützstreifen 10;
- Befestigen der Reed-Schalter $S_1$ bis $S_n$ und der Widerstände $R_1$ bis $R_n$ an den entsprechenden Anschlußleitern 6,7,8,9;
- Umhüllen der Schaltelemente $R_1,S_1$; $R_2,S_2$; $R_3,S_3$; $R_4,S_4$; $R_n,S_n$ sowie der dazugehörenden Anschlußleiter 6,7,8,9 unter Bildung von Kunststoffgehäusen 4';
- Ausstanzen der Teile 13 des Stützstreifens 10;
- gegebenenfalls Umbiegen derjenigen Randstreifen, die über die Kunststoffgehäuse 4' hinausragen, bis auf eine Oberfläche dieser Kunststoffgehäuse 4'.

In Fig. 7 ist eine andere Ausführungsform der Schalterkette dargestellt. Bei dieser Ausführungsform sind die Längsachsen der Kunststoffgehäuse 4' mit den darin enthaltenen Schalteinheiten 4 quer zur Längsachse der Schalterkette angeordnet. Es ergibt sich auf diese Weise eine etwas größere Packungsdichte und somit beim Gebrauch eine feinere Anzeige. Allerdings ist nicht zu übersehen, daß auch die Reed-Schalter $S_1$;$S_2$;$S_n$ quer zur Längsachse der Kette liegen, was möglicherweise zu einer Minderung der Schaltempfindlichkeit führt.

Bezugszeichenliste

| | |
|---|---|
| $S_1$ ... $S_n$ | Reed-Schalter |
| $R_1$ ... $R_n$ | Widerstände |
| 1 | äußere Anschlüsse |
| 2 | äußere Anschlüsse |
| 3 | Anschlußleiter |
| 4 | Schalteinheit |
| 4' | Kunststoffgehäuse |
| 5 | Trägerstreifen |
| 6 | Anschlußleiter für Reed-Schalter |
| 7 | Anschlußleiter für Reed-Schalter |
| 8 | Anschlußleiter für Widerstand |
| 9 | Anschlußleiter für Widerstand |
| 10 | Stützstreifen |
| 11 | Verbindungsstreifen |
| 12 | Verbindungsstreifen |
| 13 | Teile des Stützstreifens 10 |

**Patentansprüche**

1. Aus einem Schwimmagneten und einer magnetfeld-empfindlichen Schaltkette bestehende Sensor-Anordnung für die Niveau-Ermittlung von fließfähigen Medien mit folgenden bekannten Merkmalen:
   - Die magnetfeld-empfindliche Schaltkette enthält eine Vielzahl von gekapselten Schalteinheiten, die an einem bandförmigen Träger befestigt und elektrisch miteinander verbunden sind;
   - jede Schalteinheit besteht aus einem Reed-Schalter und wenigstens einem Widerstand,
     -- die in einem Kunststoffgehäuse zusammengefaßt sind und
     -- deren Anschlüsse über Anschlußleiter nach außen geführt und
     -- über Verschaltungsleiter miteinander verbunden sind;
   - die Schaltkette ist durch folgende Merkmale **gekennzeichnet**:
     -- die Kunststoffgehäuse (4') sind an einander gegenüberliegenden Seiten durch metallische Leiter (5,11) mechanisch miteinander zu einer Kette verbunden;
     -- dieselben metallischen Leiter (5,11) verbinden auch die Schalteinheiten (4) elektrisch miteinander;
     -- an einer Seite der Kunststoffgehäuse befindet sich ein ohne Unterbrechung über die gesamte Kette reichendes metallisches Trägerband (5),

--- von dem jeweils elektrisch Querverbindungen (12) zu einem Anschluß eines jeden Reed-Schalters ($R_1$ ... $R_n$) führen,

-- an den gegenüberliegenden Seiten der Kunststoffgehäuse befinden sich metallische Schaltbrücken (11),

die den zweiten Anschluß eines jeden Reed-Schalters ($R_1$ bis $R_n$) mit einem Anschluß des zur gleichen Schalteinheit gehörenden Widerstandes ($R_1$ bis $R_n$) und beide mit dem anderen Anschluß des in der Kette nachfolgenden Widerstandes verbinden.

2. Sensoranordnung nach Anspruch 1,
dadurch gekennzeichnet,
daß die Kunststoffgehäuse (4') in Längsrichtung hintereinander angeordnet und die seitlich überstehenden Metallteile [Trägerband (5), Schaltbrücken (11)] in Richtung auf die Kunststoffgehäuse (4) umgebogen sind.

3. Sensor nach Anspruch 1,
dadurch gekennzeichnet,
daß die Kunststoffgehäuse (4') mit ihren Längsachsen quer zur Längsachse des Trägerbandes (5) angeordnet sind.

4. Verfahren zum Herstellen einer Schalterkette der Sensoreinheit nach einem der Ansprüche 1 bis 3,
gekennzeichnet durch folgende Verfahrensschritte:

- Ausstanzen oder Ausätzen eines Schaltungsmusters nach Fig. 2, bei welchem Schaltungsmuster folgende Teile stehen bleiben:

-- ein durchgehender Trägerstreifen (5),
-- zwei Anschlußleiter (6,7) für den Reed-Schalter,
-- zwei Anschlußleiter (8,9) für den Widerstand,
-- ein Stützstreifen (10),
-- eine Folge von Verbindungsstreifen (11) zwischen den Anschlußleitern (9,7,8),
-- eine Folge von Verbindungsstreifen (12) zwischen den Trägerstreifen (5) und den Stützstreifen (10),

- Befestigen der Reed-Schalter ($S_1$ ... $S_n$) und der Widerstände ($R_1$ ... $R_n$) an den entsprechenden Anschlußleitern (6,7,8,9);

- Umhüllen der Schaltelemente ($R_1,S_1$; $R_2,S_2$; ... $R_n,S_n$) sowie der dazugehörenden Anschlußleiter (6,7,8,9) mit Kunststoff unter Bildung von Kunststoffgehäusen (4'),

- Ausstanzen der Teile (13) des Stützstreifens (10),

- gegebenenfalls Umbiegen derjenigen Randstreifen, die über die Kunststoffgehäuse (4') hinausragen bis auf eine Oberfläche dieser Kunststoffgehäuse.

FIG.1

FIG.7

FIG.6

EP 0 518 307 A2

FIG.2

FIG.3

FIG.4

FIG.5